Europäisches Patentamt

European Patent Office

Office européen des brevets

(19)

(11) Publication number: **0 275 674**
**A1**

## (12) EUROPEAN PATENT APPLICATION

(21) Application number: **87311121.5**

(22) Date of filing: **17.12.87**

(51) Int. Cl.⁴: **A01K 63/02**

(30) Priority: **18.12.86 GB 8630211**

(43) Date of publication of application:
**27.07.88 Bulletin 88/30**

(84) Designated Contracting States:
**BE DE ES FR GB IT NL SE**

(71) Applicant: **Partridge, James Christopher Brock**
**31 Riverside Road**
**Shoreham-by-Sea Sussex(GB)**

(72) Inventor: **Partridge, James Christopher Brock**
**31 Riverside Road**
**Shoreham-by-Sea Sussex(GB)**

(74) Representative: **Boon, Graham Anthony et al**
**Elkington and Fife High Holborn House 52/54**
**High Holborn**
**London, WC1V 6SH(GB)**

(54) System for storing aquatic livestock.

(57) A system is provided for transporting aquatic livestock, for example shellfish. This comprises a plurality of containers (1,101) each capable of holding such livestock in water and arranged to form a stable load for transportation. Each container has the shape of a U as viewed in end elevation, with the arms (2,3) of the U being, in use, in liquid communication with one another via the base (4) of the U and the upper surface (5) of the base of the U forming a walkway.

Means (13, 14b) can be provided to allow water to circulate through each container, and means (8,8a) can be provided to enable water in each container to be aerated.

FIG.1.

EP 0 275 674 A1

## System for storing aquatic livestock

This invention relates to a system for storing aquatic livestock in a live condition. One particular application of the system of the invention is in the storage of live crabs or other shellfish, but the invention can also be applied to the storage of other aquatic species.

At present there are three main so-called vivier systems, all of which are suitable for certain stages of transporting and maintaining a fresh catch to a customer, but all of which have high installation costs and a lack of flexibility. The first system is that which exists on board a fishing vessel, where the catch is either stored dry or in permanent tanks. Secondly, there is an on-shore system where large concrete holding tanks are generally used. Thirdly, there is the system used to transport the catch by road. This consists of specialized vivier lorries which are usually refrigerated and which have permanently fitted tanks.

Typically a catch is successively transferred by hand from the fishing vessel storage system to a lorry, from there to the on-shore storage system and thence to a vivier lorry. Each transfer involves labour intensive loading and unloading by hand which is time consuming, expensive and involves a high risk of damaging the livestock.

It should be appreciated that due to the sensitive and delicate nature of the livestock they should as far as possible be kept in their optimum aquatic environment, and this is of paramount importance if the mortality rate is to be kept to a minimum. Not only does the conventional procedure involve extensive and undesirable loading and unloading, it also means that purpose-built vivier lorries are required for the third stage. These lorries are expensive and, furthermore, they cannot be used for any other purpose. Thus, where vivier lorries are used to carry a cargo of aquatic livestock from a location such as a port to a customer the lorry generally has to return empty because there is no aquatic livestock for it to carry on the return journey.

It is an object of the present invention to provide a system which eliminates or at least reduces the above problem.

According to the present invention there is provided a system for transporting aquatic livestock, comprising a plurality of containers each capable of holding such livestock in water and arranged to form a stable load for transportation.

There is also provided a container for use in such a system, which has the shape of a U as viewed in end elevation, with the arms of the U being, in use, in liquid communication with one another via the base of the U and the upper surface of the base of the U forming a walkway.

Preferably means are provided to allow water to circulate through each container, and preferably means are provided to enable water in each container to be aerated.

The invention will now be further described with reference to the accompanying drawings, in which:

Figure 1 is a perspective view showing an embodiment of the invention,

Figure 2 shows the embodiment of Figure 1 but with the addition of means to enable water to circulate;

Figure 3 is a side elevation of another form of container;

Figure 4 shows a valve arrangement used in the container of Figure 3;

Figure 5 shows a number of containers mounted on a lorry; and

Figures 6a and 6b show a number of containers mounted on a vessel.

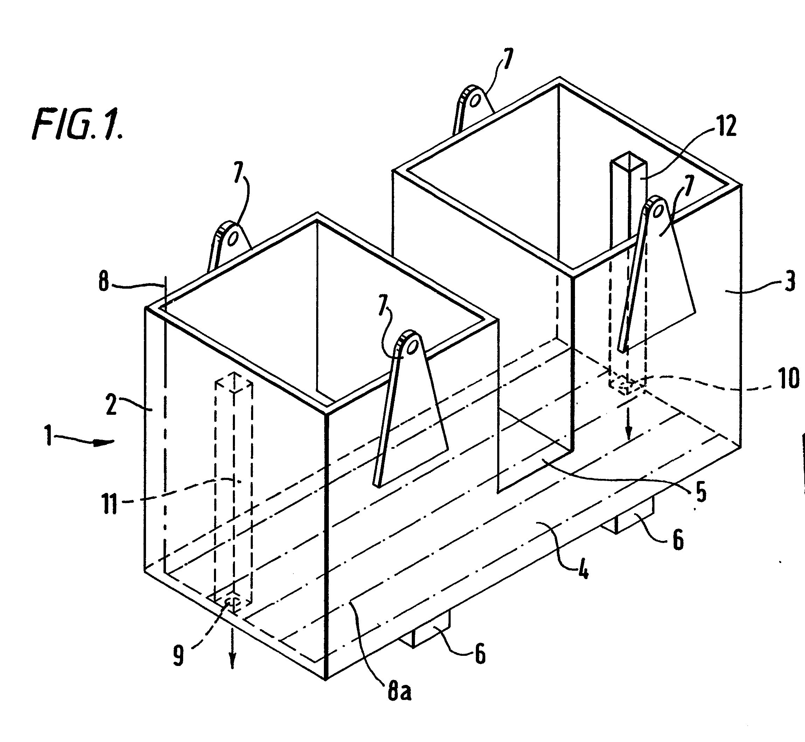

Figure 1 shows a container 1, the shape of which, as viewed in end elevation, is substantially that of a U. The arms of the U are constituted by first and second chambers 2 and 3 respectively, and the lower portions of the chambers 2 and 3 are interconnected by a connecting portion 4. The upper surface 5 of the connecting portion 4 forms the floor of a walkway which extends between the chambers 2 and 3. The container is supported on a pair of supporting members 6 so that it can be picked up by the forks of a forklift truck. If desired additional supporting members may be provided, for example to afford greater strength. The tops of the chambers 2 and 3 are open. If desired covers may be provided, but at least where shellfish are being transported covers are not generally necessary. Shellfish are normally transported as a virtually solid mass, and there is little scope for water in the chambers to splash out. To enable the container to be picked up by a crane the container may be provided with brackets 7 having eyes in which the hooks of a crane mechanism can engage. However, the brackets may be omitted and the container picked up using a sling passed around it. If desired, a vertically extending mesh grille may be mounted in the connection portion 4, the grille extending parallel to the length of the walkway provided by the surface 5. Different aquatic species can then be kept separately in the chambers 2 and 3. This grille can form a structural part of the container and serve to increase the stiffness thereof.

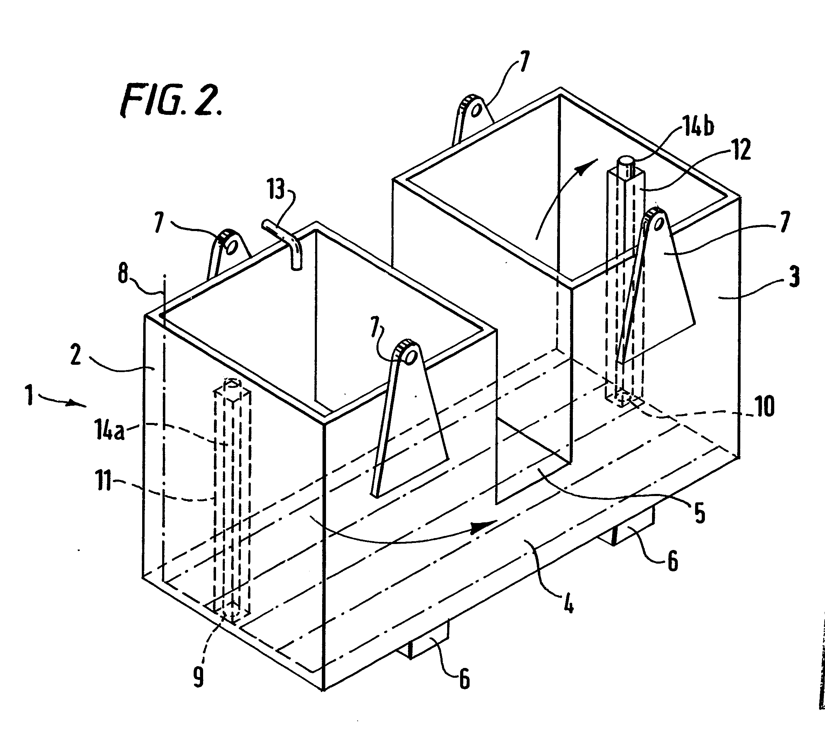

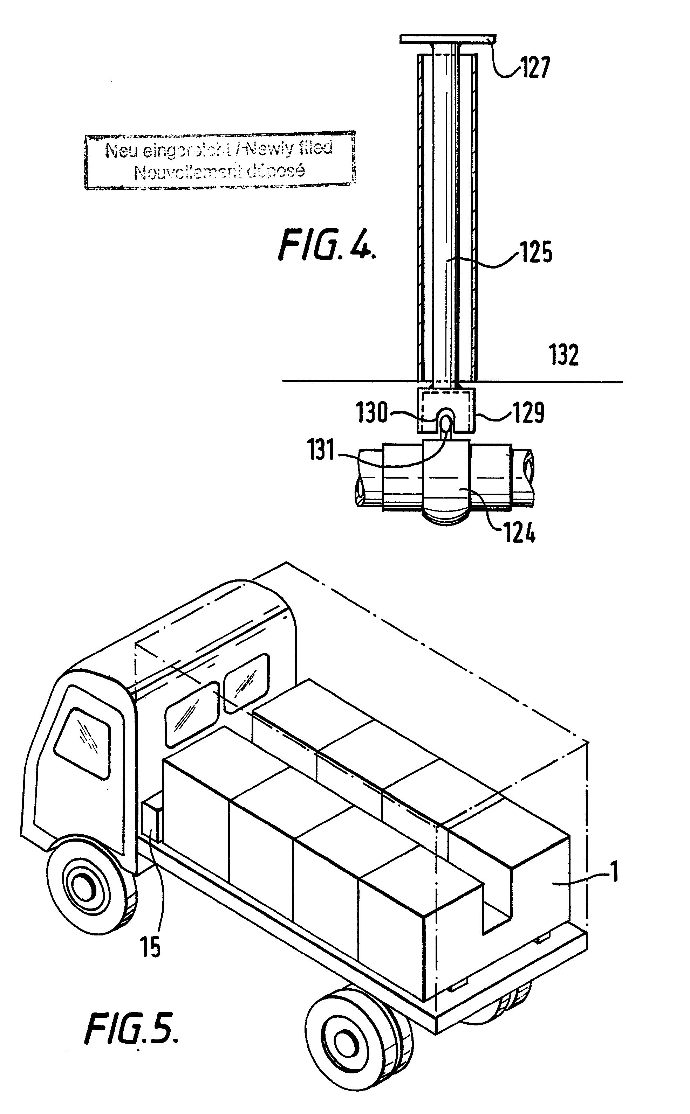

To allow water in the container to be aerated an air inlet line 8 is provided, which is fed by air from a compressor, as indicated by the arrow to line 8. The line 8 feeds a number of small parallel pipes 8a which are secured to the internal bottom surface of the container and which have holes formed therein to allow the air to bubble freely and uniformly up to the surface of the water. To allow water to be discharged from the container two outlets 9 and 10 are provided one on either side. These outlets are normally plugged, preferably means which can be operated from above the container. The reasons for this will be apparent when one considers the difficulty of gaining access to the bottom of the container when it is positioned in a lorry (see Figure 5). The plugging may be effected by a pair of vertical shafts (not shown in Figure 1) which extend upwardly within grilles 11 and 12. These grilles are perforated and are provided to prevent livestock within the container blocking the outlets. The above mentioned shafts may conveniently be in the form of overflow pipes, and this is described further below with reference to Figure 2.

Figure 2 shows a container identical to that shown in Figure 1 except for the addition of means enabling water to circulate through the container. For this purpose a water inlet 13 is provided which feeds water into the chamber 2. The outlet 9 is plugged by means of a pipe 14a mounted inside the grille 11 so that water from the chamber 2 passes through the connecting portion 4 into the chamber 3. A pipe 14b is mounted inside the grille 12, the lower end of the pipe communicating with the outlet 10. The pipe 14b is slightly shorter than pipe 14a so that water in the chamber 3, once it reaches a certain level, will overflow down the pipe 14b (but not down the pipe 14a) and thence out through the outlet 10, which is connected to an outlet hose (not shown). It will be observed that the U shape of the container not only enables a walkway to be provided but also assists in ensuring that the flow of water through the container is effective substantially throughout the volume of water and not just in a straight line between the water inlet and the water outlet.

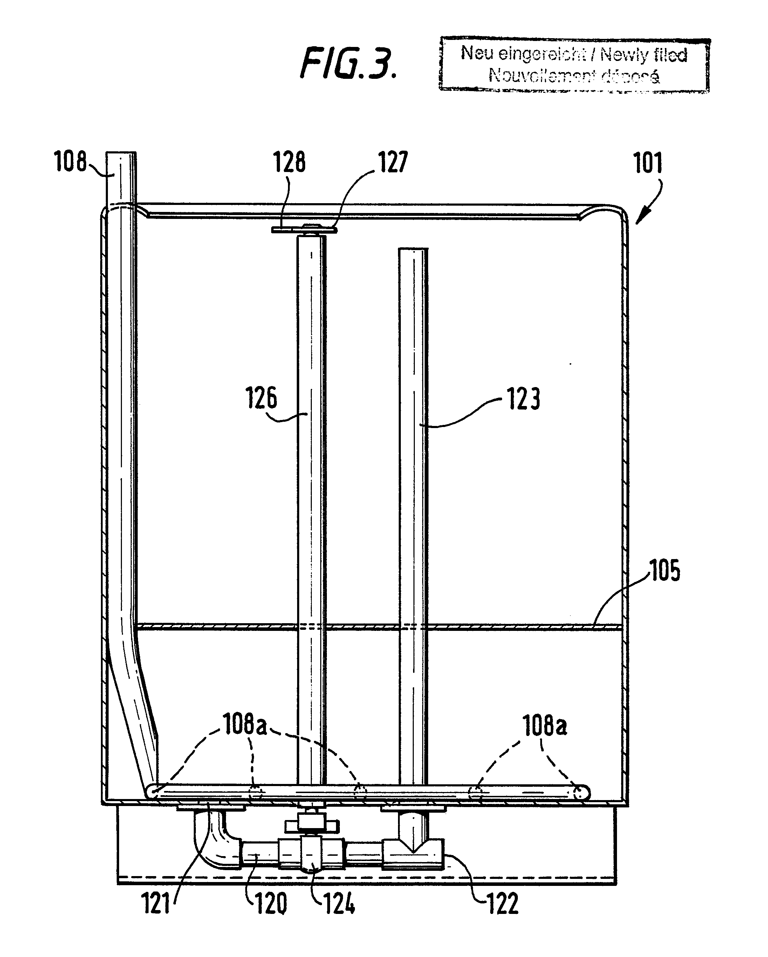

In the embodiment of container shown in Figures 3 and 4 parts which correspond generally to parts shown in Figures 1 and 2 are generally denoted by the same reference numerals but with the addition of 100.

The embodiment of Figure 3 comprises an outlet pipe 120 which extends from an opening 121 in the bottom of the container and the upstream end of the pipe to an outlet 122 at the downstream end of the pipe. A vertically extending overflow pipe 123 communicates at its lower end with the pipe 120 adjacent the downstream end thereof. A valve 124 is provided in the pipe 120 between the upstream end of the pipe 120 and the communication with the overflow pipe 123. The valve is movable between its closed and open positions by a rod 125 which extends inside a tubular casing 126. The rod has a handle 127 at its upper end provided, as shown in Figure 3, with a protruding finger 128 for easier grip. At its lower end the rod carries a tubular member 129 having a pair of diametrically opposed cut-outs 130 which engage a key 131 extending from the top of the valve. Rotating the rod 125 by means of the handle 127 moves the valve from its open to its closed position, or vice versa. In its open position the valve allows water to drain out of the tank through the opening 121. The level of the base of the interior of the container is indicated by reference 132.

It is to be understood that Figure 3 shows one half of the complete container. The other half of the container is provided with an overflow pipe but does not necessarily require a valve corresponding to valve 124 but may be provided with such a valve. Rather than have overflow pipes which terminate at different levels, both pipes may be of the same height and a selected one can then be blocked so that water can only flow out through the other pipe. Water will then be introduced on the side of the container where the blocked overflow pipe is situated.

Figure 5 shows four containers according to the invention mounted on a lorry. The walkways in the continuous walkway from the back to the front of the load-carrying area of the lorry. In this way access can be obtained to any of the containers even after loading. The width of the containers is preferably less than the width of the interior of the lorry, so as to leave a gap between each side of the lorry and the adjacent surface of the container. The lorry is provided with an air compressor 15 to feed compressed air to the lines 8 (see Figures 1 and 2). Where the lorry is to travel a very long distance or through a warm climate it will normally be refrigerated. However, for journeys of lesser duration or in cooler climates it may be sufficient simply to pack the walkway with ice. The presence of the above-mentioned gaps at the sides of the containers and the space underneath resulting from the presence of the supporting members 6 means that cold air is able to circulate around substantially the whole of the outside of the containers thus providing excellent cooling. Also, the fact that the side walls of the containers are out of contact with the internal walls of the lorry, and the contact between the bases of the containers and the floor of the lorry is only such as is necessary to support the containers, substantially eliminates the conduction of heat from the internal surfaces of the lorry into the water. There is normally no need to anchor the containers down, at least in the case where the load area of the lorry is enclosed. Where the lorry is a flat-back lorry the containers would normally be tied down in a conventional manner and a self-contained portable compressor unit bolted or otherwise secured on the lorry.

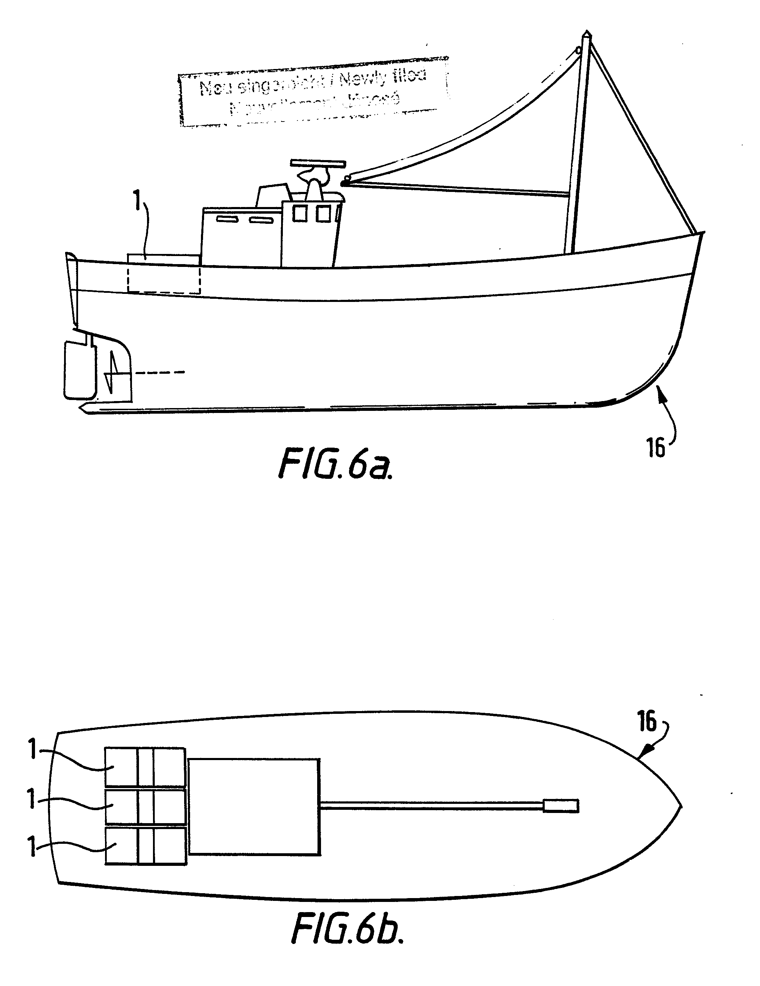

Figures 6a and 6b shows three containers 1 mounted on a boat 16. Since there is an immediate supply of water available the containers will usually be supplied with water in the manner indicated in Figure 2.

Although the above description has mentioned only the use of lorries and boats as means of transporting containers according to the present invention it will be appreciated that the invention could also be used when other methods of transportation are employed, for example transportation by air.

It will be seen from what has been described above that the present invention can be used so as greatly to reduce the extent to which it is necessary to handle aquatic livestock during storage and transport. For example, the livestock may be initially loaded into containers on a fishing vessel, and then those containers may be lifted off the vessel to onshore storage facilities in which containers are removably held, then onto a lorry for transport, and finally off the lorry at the eventual destination. The entire transport operation can thus be carried out without handling the livestock at all. Even if it is decided that the same containers should not be used throughout, for example if the livestock are unloaded manually from storage tanks on the fishing vessel into permanent tanks at an onshore facility and only thereafter loaded into containers according to the present invention for loading onto a lorry, there will still be an overall reduction in the amount of handling concerned. Furthermore, loading into the containers for transport on the lorry can take place without the lorry needing to be present, thus reducing the time for which the lorry is off the road. It should also be noted that a lorry loaded with containers can call successively at a number of destinations such as markets, dropping off one or more containers, at each destination, the containers serving there as individual self-contained vivier units.

## Claims

1. A system for transporting aquatic livestock, characterised in that it comprises a plurality of containers (1,101) each capable of holding such livestock in water and arranged to form a stable load for transportation.

2. A system according to claim 1, wherein the containers (1,101) each have the shape of a U as viewed in end elevation, with the arms (2,3) of the U being, in use, in liquid communication with one another via the base (4) of U.

3. A system according to claim 2, wherein the upper surface (5) of the base of the U forms a walkway.

4. A system according to claim 3, wherein the walkways of the containers are aligned with one another to form a continuous path.

5. A system according to any one of claims 2 to 4, wherein a grille extends across the chamber (4) forming the base of the U to define two separate, but liquid communicating chambers (2,3) in the respective arms of the U.

6. A system according to any preceding claim, wherein means are provided for circulating water through the containers.

7. A system according to claim 6 as dependent on claim 2, wherein means are provided for introducing water into one arm (2) of the U, and means (14b) are provided in the other arm (3) for allowing water to overflow therefrom when the water level therein exceeds a predetermined level, whereby water flows into and through the said one arm (2), through the base (4) of the U, and into and through the other arm (3) and out through the overflow.

8. A system according to any preceding claim, wherein each container is provided with an outlet controllable by means (14a, 14b, 124) operable from above.

9. A system according to any preceding claim removably located in a means of transportation, with the walls and bases of the containers being preferably out of contact with the adjacent surfaces of the transportation means except to the extent which may be necessary to support the containers.

10. A container (1,101) for use in transporting aquatic livestock, which has the shape of a U as viewed in end elevation, with the arms (2,3) of the U being, in use, in liquid communication with one another via the base of the U and the upper surface of the base of the U forming a walkway.

*FIG.1.*

0 275 674

**FIG. 2.**

0 275 674

FIG.3.

FIG.4.

127

125

132

130   129

131

124

FIG.5.

15

1

1

16

## FIG.6a.

1

1

1

16

## FIG.6b.

**European Patent Office**

**EUROPEAN SEARCH REPORT**

Application Number

EP 87 31 1121

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| X | DE-U-1 784 001 (W. QUAST et al.) * claims; figures * | 1 | A 01 K 63/02 |
| A | | 9 | |
| | --- | | |
| X | DE-C- 160 966 (H. FRITSCHE) * claims; figures * | 1 | |
| Y | | 2 | |
| A | | 6,8,10 | |
| | --- | | |
| Y | DE-C- 16 369 (PACHALY) * figure 2; claim 1 * | 2 | |
| A | | 3,5,8 | |
| | ----- | | |

**TECHNICAL FIELDS SEARCHED (Int. Cl.3)**

A 01 K 63/00

The present search report has been drawn up for all claims

| Place of search | Date of completion of the search | Examiner |
|---|---|---|
| BERLIN | 20-03-1988 | WUNDERLICH J E |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)